Europäisches Patentamt

European Patent Office

Office européen des brevets

(11) Publication number: **0 398 846**
A2

# EUROPEAN PATENT APPLICATION

(21) Application number: 90830030.4

(51) Int. Cl.⁵: **D21B 1/32**

(22) Date of filing: 26.01.90

(30) Priority: 27.01.89 IT 1922089

(43) Date of publication of application:
22.11.90 Bulletin 90/47

(84) Designated Contracting States:
AT CH DE ES FR GB GR LI SE

(71) Applicant: **COMER S.p.A.**
**Zona Industriale**
**S. Vito Di Leguzzano (Vicenza)(IT)**

(72) Inventor: **Segalla, Rodolfo**
**Via Riboli, 28**
**Schio (Vicenza)(IT)**
Inventor: **Codoni, Augusto**
**Via Rampignano**
**Pomarolo (Trento)(IT)**

(74) Representative: **Mercurio, Franco et al**
**c/o Società Italiana Brevetti S.p.A. Via**
**Carducci, 8**
**I-20123 Milano(IT)**

(54) Deinking apparatus in the constant density section of paper manufacturing plants.

(57) This invention concerns a deinking apparatus in a paper manufacturing plant including a) a pulp preparation section, comprising a pulper and purifier and thickening means for paper slurry refining, b) a constant density section wherein no more slurry thickening operations are required, and wherein the slurry is a low density one, suitable to be supplied to the headbox. Said deinking apparatus is located in said constant and low density section of the plant, whereby the apparatus receives a slurry which is already low density, and supplies it to the headbox, after deinking.

_Fig. 1_

# DEINKING APPARATUS IN THE CONSTANT DENSITY SECTION OF PAPER MANUFACTURING PLANTS

This invention relates to choosing the location of the deinking apparatus within a paper manufacturing plant.

As it is already known, in order to recover printed wastepaper, deinking apparatus have been designed and built, in particular in the last few years, to be installed in the paper manufacturing plants. Said apparatus have been installed especially in the so-called "pulp preparation section" i.e. between the pulperization and the thickening means for refining and/or for dissolving clots. In order that flotation cell deinking can be performed, the fibrous paper slurry entering said cells needs to be a low density one (0,2% - 1%) while in the pulp preparation section the density is never low, in that a quite high density, i.e. no lower than 4%, is needed for refining and for clot dissolving. Therefore, in said known plants, slurry density is lowered on purpose before said slurry is sent to the flotation cells, and then the density is increased again to more than 4% so that said refining and clot dissolving operations can be performed.

Obviously, additional apparatus are required to obtain a reduction in density and a subsequent density increase, such as thickeners, washers, clarifiers (the latter being used in treating the water resulting from the thickening process, which water is recirculated for diluting the pulp entering the cell (density in the range 0,2-1%)). As it is easily understood, all the above besides increasing investment costs makes also the plant running costs to go higher ( more energy required, additional maintenance, and so on).

As a confirmation of what has been said above, in british Patent No. 2.114. 178 there is described an example of deinking cells provided in the pulp preparation section, wherein the slurry is diluted on purpose upstream from the flotation cells, and then it is thickened again at the exit therefrom.

The object of this invention is to provide a deinking action without said additional apparatus and therefore without incurring in the above mentioned costs. The above and further purposes are fulfilled by locating the deinking cells, in a paper manufacturing plant, within the "constant density section" of the plant, where density is low, i.e. between the refining or clot dissolving section and the headbox, whereby this apparatus receives a slurry which is low density in itself, and supplies it to the headbox after deinking.

Further features and advantages of this invention will become apparent from the following detailed description of a preferred but not exclusive embodiment thereof, reported herein for purely exemplary and non limiting purposes, and referring to the attached Figures, wherein:

Figure 1 is a schematic diagram of a paper manufacturing plant with the deinking apparatus provided in a location already known in the art, and

Figure 2 is a schematic diagram of a paper manufacturing plant wherein the deinking apparatus is located in the constant density section of the plant, according to the subject of this invention.

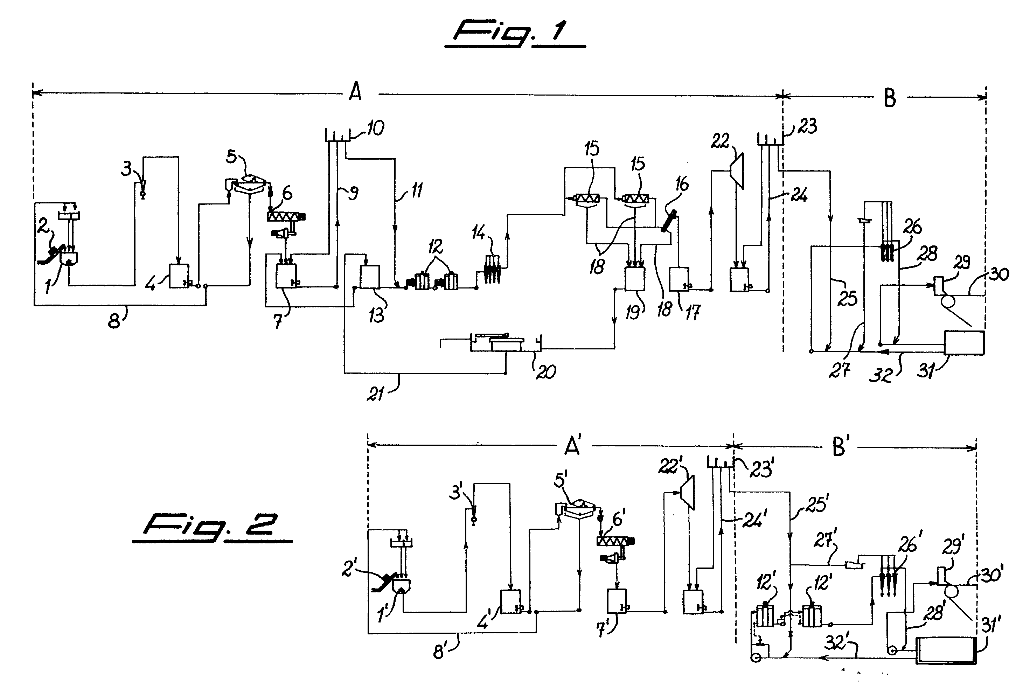

Referring now to Figure 1, the pulper receives wastepaper 2 which is disintegrated therein, in a way known per se, in order to form a slurry which is purified at 3, for instance by means of a hydrocyclone and introduced in holding vat 4. From the latter, the slurry is thickened in a press 5 and it is subsequently dispersed in a dispersing apparatus 6 whereafter it is forwarded to a holding vat 7. From press 5, the separated water proceeds to pulper 1, by means of duct 8, in order to disintegrate wastepaper 2. From holding vat 7, the slurry is forwarded, through duct 9, to constant level tank 10 wherefrom it is forwarded, through line 11, to flotation cells 12, after having been suitably diluted down to about 1% by means of the diluting water coming from vat 13. After having been deinked in cells 12, the slurry is purified in purifiers 14 and then thickened again in drum thickeners 15 and subsequently in screw thickener 16 wherefrom it is forwarded to holding vat 17. The water separated in thickeners 15 and 16 is forwarded, through ducts 18, to holding vat 19 and from the latter to clarifier 20 which is used to supply, through line 21, vat 13 with water to be used in diluting the slurry entering, through 11, flotation cells 12.

The slurry contained in holding vat 17, having a density higher than 4%, is pumped to refiner 22.

From the latter the slurry is sent to a holding vat wherefrom it is pumped to a constant level tank 23 through line 24.

All the apparatus described above comprise the so called pulp preparation section of the plant, which is indicated with reference character A. As it is shown, if the deinking cells are located in the pulp preparation section, there is a need to lower the slurry density before entering the cells, and to subsequently increase the density to feed the refiner. Said known solution has the disadvantage of requiring apparatus to be used to create on purpose, first a slurry density reduction and then an increase thereof, with related cost increase for said apparatus and for the energy required to operate the same. Still in a way already known, the slurry coming from constant level tank 23 through duct 25 is purified in purifiers 26 and waste material generated by the latter is recirculated at 26, after having passed through duct 27. The material ac-

ce,,ted at 26, by way of line 28, enters headbox 29 which is associated with wire table 30. Tank 31 is used to collect water coming from wire table 30, in order to thin down the slurry through 32.

As it is already known, the apparatus provided between constant level tank 23 and wire table 30 comprise the constant density section of the plant, indicated with reference character B.

We refer now to Figure 2 which shows the new location of the deinking cells in a paper manufacturing plant. It should be noted that in the following description the apparatus identical to the ones shown in Figure 1 will be indicated with the same reference numbers, provided with symbol "'". Pulper 1' receives wastepaper 2' which is disintegrated whereby a slurry is formed, which is purified in purifier 3' and sent therefrom to a holding vat 4'. The slurry is then thickened through press 5' and dispersed through dispersing apparatus 6', whereby it reaches a density higher than 4% within holding vat 7'; in such a way, the slurry has reached a density suitable for processing thereof through refiner 22' to which it is forwarded directly, i.e. without reaching the deinking cells through a diluting and thickening sequence as it was instead the case in the conventional technical process, and as it has been described above referring to Figure 1. Diluting water recovered at press 5' is forwarded to pulper 1' through line 8'.

Then the slurry is sent to constant level tank 23', by means of line 24'.

The above described apparatus, provided between pulper 1' and tank 23' comprise the pulp preparation section of the plant, referenced with A', with the advantage that, when a slurry deinking is required, the deinking cells are not located in that section, whereby there is no need to perform a dilution and a subsequent thickening, as provided in the plants already known, but the deinking cells are located in the constant density section of the plant, as it will be described in the following. The slurry coming from tank 23' is passed through line 25' and enters the flotation deinking cells 12' through line 32' to proceed then through purifiers 26'. Waste materials from the latter, through a duct 27' and a vibrating screen, are recirculated to duct 25' which supplies the fibrous slurry to flotation cells 12'. The slurry which has been accepted by purifiers 26' is forwarded, through line 28', to headbox 29' and from the latter to wire table 30'. The separated water coming from wire table 30' is collected in tank 31' whereby said water, pumped through line 32', can be used to dilute the slurry entering cells 12' down to 0,2%-1%.

It should be noted that the location of deinking cells 12' has been devised in a novel fashion, such that there is no need to provide the system with additional apparatus, in that the slurry dilution ranging between 0,2% and 1%, to feed the headbox in a known fashion, is advantageously exploited in supplying the deinking cells located upstream from the headbox, before purifiers 26'. In some particular cases it will be possible to provide the flotation cells also downstream from said purifiers 26', but in any case it will never be necessary to use additional dilution or thickening.

Practical or embodimental modifications may be made to this invention without exceeding the scope of the inventive concept, as it is claimed in the following.

## Claims

1. A deinking apparatus in a paper manufacturing plant, said plant including: a) a pulp preparation section substantially comprised of a pulper and of purifying and thickening means for paper slurry refining, b) the constant density section wherein no more slurry thickening operations are required, and wherein the slurry is a low density one suitable to be supplied to the headbox; said deinking apparatus being characterized in that it is located in said constant and low density section of the plant, whereby said apparatus receives an already low density slurry and supplies it, after deinking, to the headbox.

2. The deinking apparatus of Claim 1, characterized in that it comprises one or more flotation deinking cells.

Fig.1

Fig.2